# FASCICULE DE BREVET EUROPEEN

(11) **EP 0 375 487 B1**
(45) Date de publication et mention de la délivrance du brevet: **29.12.1993**
(21) Numéro de dépôt: 89403302.6
(22) Date de dépôt: 29.11.1989
(51) Int. Cl.: G05B 19/05

(54) **Procédé et dispositif pour tester le programme d'un automate programmable**
Verfahren und Einrichtung zum Testen des Programmes einer speicherprogrammierbaren Steuerung
Method and device for testing the programme of a programmable logic controller

(30) Priorité: 23.12.1988 FR 8817056
(43) Date de publication de la demande: 27.06.1990
(73) Titulaire: AUTOMOBILES PEUGEOT, 75116 Paris (FR); AUTOMOBILES CITROEN, 92200 Neuilly-sur-Seine (FR)
(72) Inventeur: Vernet, Henri, F-78450 Villepreux (FR); Roquemaurel, Xavier, F-78000 Versailles (FR)
(74) Mandataire: Fabien, Henri

(56) Documents cités:
- EP-A- 0 283 382
- WO-A-80/00381
- PATENT ABSTRACTS OF JAPAN vol. 6, no. 229 (P-155)(1107) 16 novembre 1982,& JP-A-57 130106 (TOKYO SHIBAURA D.K.K.) 12 août 1982,
- IEEE TRANSACTIONS ON INDUSTRY APPLICATIONS. vol. IA-16, no. 5, 1980, NEW YORK US pages 716 - 723; KRAEMER W. P.: "Testing and Start-Up of Programmable Controller Systems"

## Description

L'invention a pour objet un procédé et un dispositif pour tester le fonctionnement du programme d'un automate programmable.

A l'heure actuelle dans l'industrie, de nombreuses machines sont pilotées par des automates programmables.

Il est donc nécessaire, avant la mise en route d'une installation, de vérifier si le programme de l'automate fonctionne correctement afin d'éviter des incidents en cours d'exploitation.

Une première solution consiste à brancher directement l'automate sur la machine et à tester en vraie grandeur les différentes conditions de fonctionnement. Cependant, cette méthode est lourde à mettre en oeuvre et peut même dans certains cas, si l'automate est mal programmé, provoquer de graves détériorations à la machine.

Dans une deuxième solution, un opérateur agit manuellement sur un pupitre pour effectuer les commandes et générer des défauts de la machine. Cette méthode a pour principal défaut d'être très longue à mettre en oeuvre. Voir le document EP-A-0 283 382.

L'invention a pour but de remédier à ces inconvénients en proposant un procédé et un dispositif pour tester automatiquement le fonctionnement du programme d'un automate programmable de manière simple et fiable sans que l'automate soit relié à la machine et qui, de plus, peuvent s'adapter facilement à tout type de machine.

Selon la principale caractéristique du procédé objet de l'invention, celui-ci, servant à tester le fonctionnement du programme d'au moins un automate programmable destiné à commander une machine donnée, comprend les étapes suivantes consistant à:
a) - déterminer tous les composants élémentaires en lesquels une machine quelconque peut être décomposée, chaque composant élémentaire ayant des entrées et des sorties dont la valeur est fonction de celle des entrées;
b) - établir, pour chaque composant élémentaire ainsi déterminé, un programme qui traduit son fonctionnement normal et défectueux, ce programme, appelé "modèle de comportement", déterminant la valeur des sorties en fonction de celle des entrées;
c) - créer une bibliothèque de composants à partir de ces modèles de comportement;
d) - structurer la machine donnée en un certain nombre de sous-ensembles et décrire le fonctionnement de chaque sous-ensemble sous la forme d'un assemblage de composants élémentaires;
e) - assembler les modèles de comportement des différents composants élémentaires déterminés à l'étape d) pour faire un programme traduisant le fonctionnement complet de la machine;
f) - introduire, dans le modèle de comportement de chaque composant élémentaire de la machine donnée, les conditions de fonctionnement pour lesquelles on veut tester le programme de l'automate;
g) - introduire dans le programme établi à l'étape e) les valeurs des entrées correspondant aux sorties de l'automate;
h) - exécuter ce programme;
i) - introduire les valeurs de sorties ainsi obtenues dans les entrées de l'automate;
j) - vérifier automatiquement si les ordres donnés par celui-ci en réponse aux informations reçues à l'étape i) sont corrects;
k) - répéter les étapes f) à j) autant de fois que nécessaire selon les différentes conditions de fonctionnement que l'on veut étudier; et
l) - répéter les étapes d) à k) autant de fois que nécessaire selon les différents ensembles machine-automate que l'on veut étudier.

Pour chaque modèle de comportement, les paramètres représentés par les entrées peuvent être, notamment, les ordres reçus, les puissances reçues, les conditions générales et particulières de fonctionnement, les paramètres de fonctionnement, les défauts et incidents possibles, tandis que les sorties peuvent être, notamment, les ordres transmis, les puissances transmises, des messages d'information ou de contrôle.

Selon une autre caractéristique du procédé objet de l'invention, si les conditions de fonctionnement mentionnées à l'étape f) correspondent à un défaut pouvant entraîner l'arrêt d'au moins un sous-ensemble de la machine, l'étape j) consiste à vérifier si le mode d'arrêt est correct.

Dans ce cas, le procédé comprend les étapes supplémentaires suivantes, effectuées après l'étape j):
m) - appliquer le mode de reprise associé au défaut; et
n) - vérifier que la reprise s'effectue correctement.

L'invention a également pour objet un dispositif pour la mise en oeuvre de ce procédé. Selon la principale caractéristique de ce dispositif, celui-ci comporte un système informatique comprenant:
- un premier élément servant d'une part à créer une bibliothèque de composants et d'autre part à décrire la machine, celle-ci étant structurée en un certain nombre de sous-ensembles et chaque sous-ensemble étant décrit sous la forme d'un assemblage de composants élémentaires ayant des sorties dont la valeur est fonction de celle des entrées;
- un deuxième élément servant à créer un programme décrivant le comportement de la machine en assemblant les modèles de comportement des composants élémentaires nécessaires, ces derniers étant pris dans la bibliothèque de composants; et
- un troisième élément relié à l'automate et servant à:
   a) - exécuter cycliquement ce programme;
   b) - transmettre cycliquement la valeur des sorties des composants aux entrées de l'automate; et
   c) - transmettre cycliquement au système informatique la valeur des sorties de l'automate afin de modifier en conséquence la valeur des entrées des composants.

Si la machine est commandée par au moins un pupitre opérateur de commande, le système informatique comprend en outre un quatrième élément servant à décrire et simuler ce pupitre, celui-ci étant représenté par un ensemble de composants élémentaires de la même manière que la machine.

Ce dispositif peut comporter un ou plusieurs ordinateurs dont chacun constitue un ou plusieurs desdits éléments.

De préférence, le troisième élément est relié à l'automate par une liaison série.

Si l'automate fonctionne avec des cartes entrées-sorties de dialogue avec la machine, le dispositif comporte en outre une carte de couplage reliée au troisième élément et montée dans l'automate à la place des cartes entrées-sorties de dialogue avec la machine, cette carte de couplage servant d'une part à simuler la présence physique des cartes entrées-sorties et d'autre part à assurer la transmission des informations entre l'automate et le troisième élément.

Si l'automate est équipé d'un terminal de dialogue, le troisième élément peut avantageusement être relié à ce terminal afin d'enregistrer le dialogue entre celui-ci et l'automate.

Enfin, si la machine comporte au moins un axe numérique, le dispositif peut comporter en outre une carte spécifique reliée d'une part au troisième élément et d'autre part à l'automate programmable et servant à simuler le comportement de l'axe numérique.

L'invention apparaîtra mieux à la lecture de la description qui va suivre, donnée uniquement à titre d'exemple, faite en référence aux dessins annexés, dans lesquels:
- la Figure 1 est un schéma de principe montrant le dispositif de l'invention relié à plusieurs automates programmables que l'on veut tester;
- la Figure 2 est une vue schématique montrant le troisième élément du dispositif objet de l'invention relié par une liaison série à une carte de couplage montée dans l'un des automates;
- la Figure 3 est une vue semblable à la figure 2 montrant une carte de simulation d'un axe numérique montée entre le troisième élément et l'un des automates;
- les Figures 4a et 4b sont des vues schématiques illustrant les deux positions possibles d'un distributeur 4/2 à rappel à commandes maintenues; et
- la Figure 5 est un logigramme traduisant le fonctionnement du distributeur des Figures 4a et 4b dans des conditions normales et en cas d'incident.

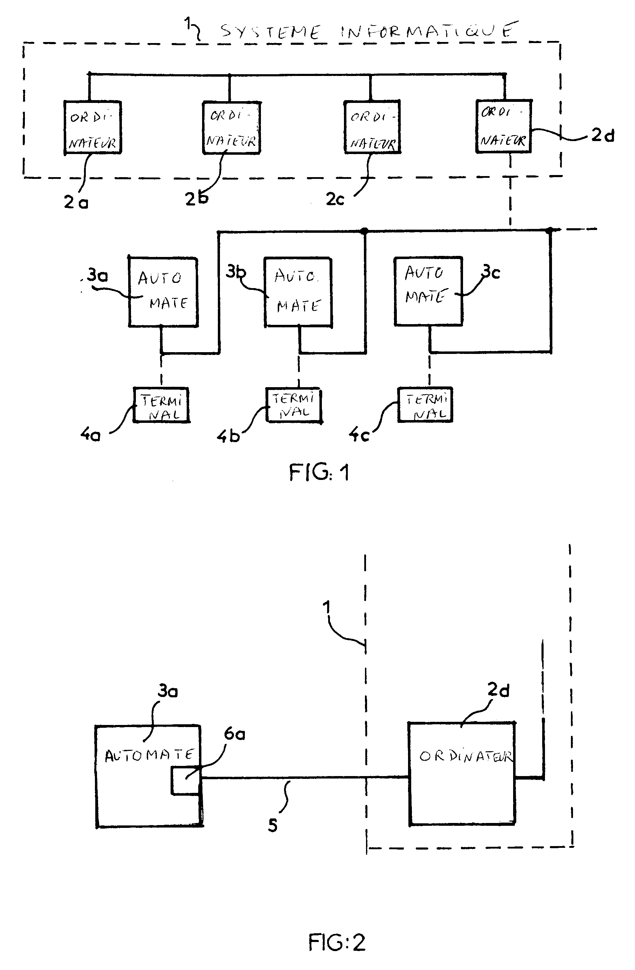

Si l'on se reporte à la figure 1, on voit que le dispositif objet de l'invention se compose essentiellement d'un système informatique, portant la référence générale 1, appelé "simulateur" et qui, dans l'exemple décrit ici, se compose de quatre ordinateurs:
- le premier, 2a, sert d'une part à créer une bibliothèque de composants et d'autre part à décrire la machine, c'est-à-dire à représenter chacun des composants élémentaires de cette dernière ainsi que leurs liaisons;
- le quatrième 2b, est utilisé lorsque la machine est commandée par un ou plusieurs pupitres et sert à décrire ce(s) pupitre(s) de la même manière que la machine;
- le deuxième, 2c, sert à créer le programme décrivant le comportement de la machine, c'est-à-dire, à partir de l'assemblage des programmes des composants élémentaires nécessaires pris dans la bibliothèque de composants, le programme permettant de déterminer la valeur des sorties des différents composants en fonction de celle des entrées;
- le troisième, 2d, sert à exécuter ce programme et à introduire la valeur des sorties des composants dans les entrées du ou des automates 3a, 3b, 3c, etc...; de plus, il est également relié aux sorties des automates pour transmettre la valeur de ces dernières au système informatique 1 et modifier en conséquence la valeur des entrées des composants.

Dans cet exemple, il y a quatre ordinateurs distincts, mais on ne sortirait pas du cadre de l'invention en remplaçant plusieurs d'entre eux par un seul exerçant les mêmes fonctions. De même, on peut supprimer ou ne pas utiliser l'ordinateur 2b si la machine n'est pas commandée par un pupitre.

Le nombre d'informations échangées entre l'ordinateur 2d et chacun des automates 3a, 3b, 3c, etc... étant très élevé, il est préférable d'utiliser des liaisons séries pour le relier à ces automates, ce qui permet de faire passer ces informations les unes à la suite des autres dans un seul câble. Ceci est illustré à la figure 2 où l'on voit que l'ordinateur 2d est relié à l'automate 3a par la liaison série 5.

Toujours sur la figure 2, on voit que l'automate 3a est équipé d'une carte de couplage 6a à laquelle aboutit la liaison série 5. En effet, les automates fonctionnent avec des cartes entrées-sorties de dialogue avec la machine. Comme le nombre d'informations échangées peut être grand, il est souvent nécessaire d'utiliser de nombreuses cartes, mais la présence de toutes ces cartes alourdirait la mise en oeuvre du procédé objet de l'invention et on préfère les retirer. Cependant, certains automates ne fonctionnent que si toutes les cartes sont en place. C'est pourquoi on utilise la carte 6a qui joue donc un double rôle: d'une part, elle est montée dans l'automate à la place des cartes entrées-sorties de dialogue avec la machine afin de simuler la présence physique de ces dernières et permettre le fonctionnement de l'automate; d'autre part, elle assure la liaison avec l'ordinateur 2d et donc avec le système informatique 1 qui simule la machine.

Si l'on se reporte à nouveau à la figure 1, on voit que chaque automate 3a, 3b, 3c... est relié à un terminal de contrôle 4a, 4b, 4c... Un tel terminal permet un dialogue avec l'opérateur et peut se présenter par exemple sous la forme d'un écran où s'affichent des messages. L'ordinateur 2d est également relié aux terminaux 4a, 4b, 4c... afin d'enregistrer le dialogue entre chaque automate et son terminal associé pour voir si les messages sont corrects.

Il se peut que la machine comporte un ou plusieurs axes numériques, c'est-à-dire des éléments dont le mouvement ne se fait pas uniquement d'une fin de course à une autre, mais peut comporter des arrêts intermédiaires. Afin de ne pas alourdir le programme de simulation du comportement de la machine, on utilise une carte spécifique interposée entre l'automate 3a, par exemple, et l'ordinateur 2d.

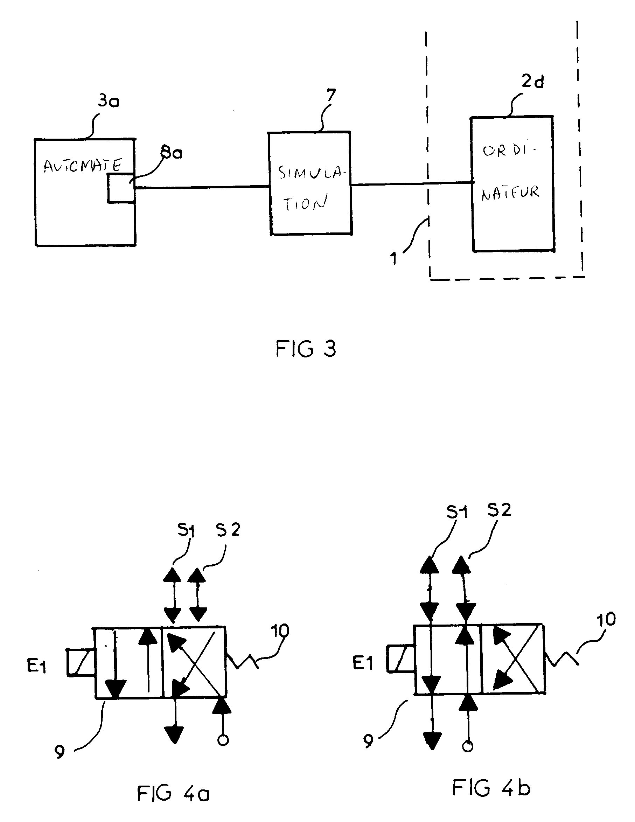

Ceci est illustré à la figure 3 où l'on voit que l'ordinateur 2d est relié directement non pas à l'automate 3a, mais à une carte 7 qui simule le comportement de l'axe numérique. Cette dernière est reliée simultanément à une carte d'axe 8a montée dans l'automate 3a et à l'ordinateur 2d.

Un axe numérique peut être par exemple l'ensemble constitué par un moteur et le variateur et le codeur de position qui lui sont associés. La carte d'axe 8a permet à l'automate 3a de donner des ordres à la carte 7, par exemple une consigne de vitesse. L'ordinateur 2d indique si le mouvement est possible: plus précisément, il indique si les systèmes de verrouillage sont en position de verrouillage ou de déverrouillage, s'il y a ou non un blocage accidentel, etc... ces renseignements étant prévus dans le programme de simulation du comportement de la machine.

Quant à la carte 7, elle indique à l'ordinateur 2d l'activité de l'axe (arrêt ou mouvement) et, s'il y a mouvement, dans quel sens celui-ci s'effectue. Elle lui indique également la position de l'axe. Enfin, elle indique à l'automate les informations données par le codeur de position. Bien entendu, la carte 7 doit être paramétrée pour tenir compte des caractéristiques du moteur (rapport de réduction, etc...) et du nombre d'impulsions du codeur par tour de moteur s'il s'agit d'un codeur incrémental.

On va maintenant montrer comment on peut traduire le fonctionnement d'un composant élémentaire d'une machine en prenant l'exemple d'un distributeur 4/2 à rappel à commandes maintenues.

Toute machine peut être structurée en un certain nombre de sous-ensembles et le fonctionnement de chaque sous-ensemble peut être décrit sous la forme d'un assemblage de composants élémentaires.

Un tel composant peut être par exemple le distributeur illustré aux figures 4a et 4b. Celui-ci, portant la référence générale 9, est mobile entre une position non excitée illustrée à la figure 4a et une position excitée illustrée à la figure 4b. Dans cette dernière position, le sens de circulation du fluide dans les sorties S1 et S2 est le contraire de ce qu'il est dans la position de la figure 4a. Un ressort 10 rappelle le distributeur dans la position de la figure 4a.

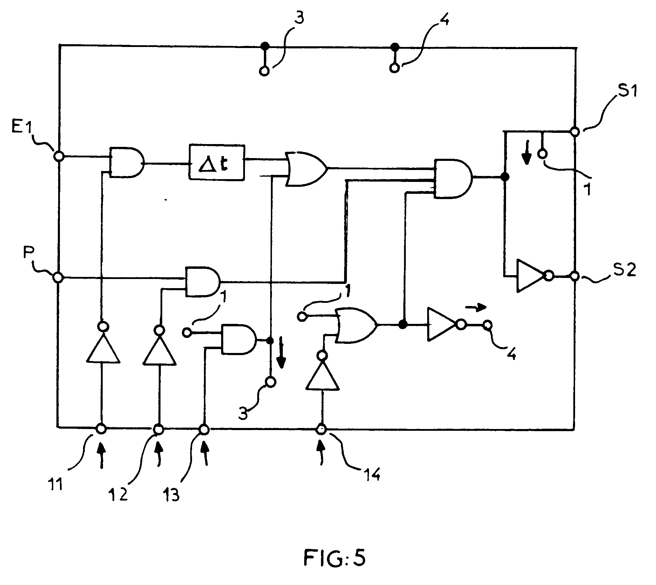

Le fonctionnement de ce distributeur est traduit par le logigramme de la figure 5. En fonctionnement normal, les entrées (sur la partie gauche de la figure) sont E1 et la puissance P reçue pour effectuer le mouvement à l'encontre du ressort 10, les sorties étant S1 et S2.

E1, P, S1 et S2 sont des variables logiques qui peuvent prendre la valeur 0 ou 1.

On conviendra que, dans la position de la figure 4a, E1=0 (état non excité), S1=0 et S2=1 tandis que, dans la position de la figure 4b, E1=1 (état excité), S1=1 et S2=0.

Les entrées 11, 12, 13 et 14 indiquées à la partie inférieure de la figure 5 correspondent respectivement aux divers incidents de fonctionnement possibles: chute de tension de commande de la machine, chute de la puissance (hydraulique, électrique, etc...) reçue par le distributeur, blocage à gauche ou à droite, c'est-à-dire dans la position de la figure 4a ou 4b respectivement. Les sorties 3 et 4 à la partie supérieure de la figure sont des messages de contrôle pour vérifier si les défauts "bloqué à gauche" ou "bloqué à droite" ont bien été pris en compte lorsqu'on les introduit dans le programme. La valeur de S1 est réintroduite au niveau des entrées 13 et 14 à titre de contrôle (référence 1 sur la figure 5). Enfin, Δ t est un retard qui correspond à l'inertie du dispositif.

Les symboles utilisés sont connus des spécialistes et ne seront pas expliqués ici. En fonctionnement normal, toutes les entrées 11 à 14 correspondant aux incidents sont mises à 0. On voit, à la lecture de ce logigramme que, si E1=0, on aura S1=0 et S2=1. Mais si E1=1, il faut que P=1 pour avoir S1=1 et S2=0.

On comprend donc qu'à partir d'un tel logigramme, on puisse établir un programme permettant de déterminer S1 et S2 dans toutes les conditions de fonctionnement possibles. On traduirait de la même manière le fonctionnement d'autres composants élémentaires d'une machine.

Il se peut que certains défauts entraînent un arrêt de la machine. Celui-ci peut être de différents types, par exemple immédiat ou différé (si on peut attendre la fin d'un cycle). A chaque défaut est associé un type d'arrêt et un type de reprise, ce dernier traduisant la démarche à suivre pour faire redémarrer la machine. Cette procédure de reprise peut être plus ou moins complexe suivant qu'il est nécessaire ou non de couper l'alimentation de la machine en courant électrique, etc...

Selon une caractéristique importante de l'invention, pour chaque défaut, le programme de simulation du comportement de la machine est prévu pour vérifier le mode d'arrêt et, si le comportement d'arrêt est correct, appliquer le mode de reprise correspondant et vérifier que la reprise s'effectue correctement.

Ainsi, le procédé et le dispositif objets de l'invention présentent de nombreux avantages dont le principal est de pouvoir tester automatiquement le programme d'un automate programmable d'une manière simple et fiable puisque c'est un système informatique qui simule le fonctionnement de la machine. On ne risque pas de détériorer celle-ci en cas de défaut dans le programme de l'automate et le système est plus facile à mettre en oeuvre qu'avec un opérateur qui appuie sur des boutons pour effectuer les commandes sur les pupitres et générer des défauts de la machine. Le test peut être effectué avant l'installation de celle-ci et permettre de corriger à temps certains défauts dans le programme de l'automate. L'invention peut être utilisée non seulement par l'utilisateur d'une machine, mais aussi par le concepteur qui pourra, si nécessaire, remédier à certains défauts avant même de lancer les premières fabrications.

De plus, le procédé objet de l'invention est très souple et s'adapte facilement à de nombreux types de machines. Ceci est rendu possible par le principe de décomposition de la machine en composants élémentaires car le nombre de composants possibles est limité. D'une machine à l'autre, on retrouve en effet les mêmes types d'éléments tels que: vérins, contacteurs, distributeurs, axes numériques, capteurs, ...

Enfin, ce principe rend le procédé objet de l'invention facile à utiliser pour les raisons suivantes:
- l'utilisateur final sait identifier facilement, sur les divers plans et schémas, les composants technologiques;
- il connaît leur comportement mécanique ou électrique. Il pourra donc aisément prévoir le comportement attendu du modèle de la machine sur génération d'un défaut et pourra même, le cas échéant, corriger le modèle de la machine et surtout juger la réaction du programme de l'automate en réponse à ce défaut;
- le faible nombre d'entrées et de sorties ainsi que de défauts associés à un composant technologique élémentaire rend la description de son comportement plus simple.

## Revendications

1. Procédé pour tester automatiquement le fonctionnement du programme d'un automate programmable (3a) destiné à commander une machine donnée,
comprenant les étapes suivantes consistant à:
a) - déterminer tous les composants élémentaires en lesquels une machine quelconque peut être décomposée, chaque composant élémentaire ayant des entrées et des sorties dont la valeur est fonction de celle des entrées;
b) - établir, pour chaque composant élémentaire ainsi déterminé, un programme qui traduit son fonctionnement normal et défectueux, ce programme, appelé modèle de comportement, déterminant la valeur des sorties en fonction de celle des entrées;
c) - créer une bibliothèque de composants à partir de ces modèles de comportement;
d) - structurer la machine donnée en un certain nombre de sous-ensembles et décrire le fonctionnement de chaque sous-ensemble sous la forme d'un assemblage de composants élémentaires ayant des entrées et des sorties dont la valeur est fonction de celle des entrées;
e) - assembler les modèles de comportement des différents composants élémentaires déterminés à l'étape d) pour faire un programme traduisant le fonctionnement complet de la machine;
f) - introduire, dans le modèle de comportement de chaque composant élémentaire de la machine donnée, les conditions de fonctionnement normales et anormales pour lesquelles on veut tester le programme de l'automate;
g) - introduire dans le programme établi à l'étape e) les valeurs des entrées correspondant aux sorties de l'automate;
h) - exécuter ce programme;
i) - introduire les valeurs des sorties ainsi obtenues dans les entrées de l'automate;
j) - vérifier automatiquement si les ordres donnés par celui-ci en réponse aux informations reçues à l'étape i) sont corrects;
k) - répéter les étapes f) à j) autant de fois que nécessaire selon les différentes conditions de fonctionnement que l'on veut étudier; et
l) - répéter les étapes d) à k) autant de fois que nécessaire selon les différents ensembles machine-automate que l'on veut étudier.

2. Procédé selon la revendication 1, caractérisé en ce que, pour chaque modèle de comportement, les paramètres représentés par les entrées appartiennent au groupe constitué par: les ordres reçus, les puissances reçues, les conditions générales et particulières de fonctionnement, les paramètres de fonctionnement, les défauts et incidents possibles.

3. Procédé selon l'une quelconque des revendications 1 et 2, caractérisé en ce que, pour chaque modèle de comportement, les paramètres représentés par les sorties appartiennent au groupe constitué par: les ordres transmis, les puissances transmises, des messages d'information ou de contrôle.

4. Procédé selon l'une quelconque des revendications 1 à 3, caractérisé en ce que, les conditions de fonctionnement mentionnées à l'étape f) correspondant à un défaut pouvant entraîner l'arrêt d'au moins un sous-ensemble de la machine, l'étape j) consiste à vérifier si le mode d'arrêt est correct.

5. Procédé selon la revendication 4, caractérisé en ce qu'il comprend les étapes supplémentaires suivantes, effectuées après l'étape j):
m) - appliquer le mode de reprise associé au défaut, et
n) - vérifier que la reprise s'effectue correctement.

6. Dispositif pour tester automatiquement le programme d'au moins un automate programmable (3a) destiné à commander une machine donnée, avec un système informatique (1) comprenant:
- un premier élément (2a) servant à criér une bibliothéque de composant et à décrire la machine, celle-ci étant structurée en un certain nombre de sous-ensembles et chaque sous-ensemble étant décrit sous la forme d'un assemblage de composants élémentaires ayant des entrées et des sorties dont la valeur est fonction de celle des entrées;
- un deuxième élément (2c) servant à créer un programme décrivant le comportement de la machine en assemblant les modèles de comportement des composants élémentaires nécessaires, ces derniers étant pris dans la bibliothèque de composants; et
- un troisième élément (2d) relié à l'automate (3a) et servant à:
a) - exécuter cycliquement ce programme;
b) - transmettre cycliquement la valeur des sorties des composants aux entrées de l'automate (3a); et
c) - transmettre cycliquement au système informatique (1) la valeur des sorties de l'automate (3a) afin de modifier en conséquence la valeur des entrées des composants.

7. Dispositif selon la revendication 6, caractérisé en ce que, la machine étant commandée par au moins un pupitre opérateur de commande, le système informatique comprend en outre un quatrième élément (2b) servant à décrire et simuler ce pupitre, celui-ci étant représenté par un ensemble de composants élémentaires de la même manière que la machine.

8. Dispositif selon l'une quelconque des revendications 6 et 7, caractérisé en ce qu'il comprend un ou plusieurs ordinateurs dont chacun constitue un ou plusieurs desdits éléments (2a à 2d).

9. Dispositif selon l'une quelconque des revendications 6 à 8, caractérisé en ce que le troisième élément (2d) est relié à l'automate (3a) par une liaison série (5).

10. Dispositif selon l'une quelconque des revendications 6 à 9, caractérisé en ce qu'il comporte en outre une carte de couplage (6a) reliée au troisième élément (2d) et montée dans l'automate (3a) à la place des cartes entrées-sorties de dialogue avec la machine, cette carte de couplage (6a) servant d'une part à simuler la présence physique des cartes entrées-sorties et d'autre part à assurer la transmission des informations entre l'automate (3a) et le troisième élément (2d).

11. Dispositif selon l'une quelconque des revendications 1 à 5, caractérisé en ce que, l'automate (3a) étant relié à un terminal de contrôle (4a), le troisième élément (2d) est également relié à ce terminal (4a) afin d'enregistrer le dialogue avec l'automate.

12. Dispositif selon l'une quelconque des revendications 6 à 11, caractérisé en ce que, la machine comportant au moins un axe numérique, c'est-à-dire un élément dont le mouvement ne se fait pas uniquement d'une fin de course à une auto, mais peut comporter des arrêts intermédiaires, il comprend en outre une carte spécifique (7) reliée d'une part au troisième élément (2d) et d'autre part à l'automate programmable (3a) et servant à simuler le comportement de l'axe numérique.

## Claims

1. A process for automatically testing the operation of the program of a programmable logic controller (3a) designed to control a given machine, comprising the following stages consisting of:
a) determining all the elementary components into which any machine can be broken down, each elementary component having inputs and outputs the value of which is a function of that of the inputs;
b) establishing, for each elementary component thus determined, a program which expresses its normal and defective operation, this program, known as a behaviour model, determining the value of the outputs as a function of that of the inputs;
c) creating a library of components based on these behaviour models;
d) structuring the given machine as a number of sub-assemblies and describing the operation of each sub-assembly in the form of an assembly of elementary components having inputs and outputs the value of which is a function of that of the inputs;
e) assembling the behaviour models of the various elementary components determined at stage d) in order to make a program expressing the complete operation of the machine;
f) entering, in the behaviour model of each elementary component of the given machine, the normal and abnormal operating conditions for which it is wished to test the program of the logic controller;
g) entering in the program set up at stage e) the values of the inputs corresponding to the outputs of the logic controller;
h) executing this program;
i) entering the values for the outputs thus obtained in the inputs of the logic controller;
j) automatically checking whether the commands given by the latter in response to the information received at stage i) are correct;
k) repeating stages f) to j) as many times as necessary according to the various operating conditions that it is wished to study; and
l) repeating stages d) to k) as many times as necessary according to the various machine/logic controller assemblies that it is wished to study.

2. A process according to Claim 1, characterised in that, for each behaviour model, the parameters represented by the inputs belong to the group constituted by: commands received, powers received, general and specific operating conditions, operating parameters, possible faults and malfunctions.

3. A process according to any one of Claims 1 and 2, characterised in that, for each behaviour model, the parameters represented by the outputs belong to the group constituted by: commands transmitted, powers transmitted, information or control messages.

4. A process according to any one of Claims 1 to 3, characterised in that, since the operating conditions mentioned in stage f) corresponding to a fault can lead to the stoppage of at least one sub-assembly in the machine, stage j) consists of checking whether the stop mode is correct.

5. A process according to Claim 4, characterised in that it comprises the following additional stages, carried out after stage j):
m) applying the restart mode associated with the fault, and
n) checking that restart is taking place correctly.

6. A device for automatically testing the program of at least one programmable logic controller (3a) designed to control a given machine, with a data processing system (1) comprising:
- a first element (2a) serving to create a component library and to describe the machine, the latter being structured as a number of sub-assemblies and each sub-assembly being described in the form of an assembly of elementary components having inputs and outputs the value of which is a function of that of the inputs;
- a second element (2c) serving to create a program describing the behaviour of the machine by assembling the behaviour models of the necessary elementary components, the latter being taken from the component library; and
- a third element (2d) connected to the logic controller (3a) and serving to:
a) execute this program cyclically;
b) cyclically transmit the value of the outputs of the components to the inputs of the logic controller (3a); and
c) cyclically transmit to the data processing system (1) the value of the outputs of the logic controller (3a) in order to modify accordingly the value of the inputs of the components.

7. A device according to Claim 6, characterised in that, the machine being controlled by at least one operator control console, the data processing system further comprises a fourth element (2b) serving to describe and simulate this console, the latter being represented by an assembly of elementary components in the same way as the machine.

8. A device according to any one of Claims 6 and 7, characterised in that it comprises one or more computers, each of which constitutes one or more of said elements (2a to 2d).

9. A device according to any one of Claims 6 to 8, characterised in that the third element (2d) is connected to the logic controller (3a) by a serial link (5).

10. A device according to any one of Claims 6 to 9, characterised in that it further comprises a coupling card (6a) connected to the third element (2d) and mounted in the logic controller (3a) in place of the input/output cards for dialogue with the machine, this coupling card (6a) serving on the one hand to simulate the physical presence of the input/output cards and, on the other hand, to ensure the transmission of data between the logic controller (3a) and the third element (2d).

11. A device according to any one of Claims 1 to 5, characterised in that, the logic controller (3a) being connected to a control terminal (4a), the third element (2d) is also connected to this terminal (4a) in order to record the dialogue with the logic controller.

12. A device according to any one of Claims 6 to 11, characterised in that, since the machine comprises at least one digital axis, that is, an element which does not move simply from one limit of travel to another, but can make intermediate stops, it further comprises a specific card (7) connected on the one hand to the third element (2d) and on the other hand to the programmable logic controller (3a), serving to simulate the behaviour of the digital axis.

## Patentansprüche

1. Verfahren zum automatischen Testen des Programmes eines programmierbaren Automaten (31) zur Steuerung einer angegebenen Maschine, das aus folgenden Schritten besteht:
a) - Alle Bauteile, aus welchen eine beliebige Maschine besteht, sowie jedes Bauteil, das Eingänge und Ausgänge aufweist, deren Wert von dem Wert der Eingänge abhängig ist, werden bestimmt;
b) - Für jedes so bestimmte Bauteil wird ein Programm erstellt, das seinen normalen und fehlerhaften Betrieb wiedergibt, wobei dieses sogenannte "Verhaltensmuster"-Programm den Wert der Ausgänge in Abhängigkeit vom Wert der Eingänge bestimmt;
c) - Eine Bibliothek der Bauteile wird aufgrund dieser Verhaltensmuster zusammengestellt;
d) - Die angegebene Maschine wird in Untergruppen strukturiert, und die Funktion jeder Untergruppe wird als eine Verbindung von Bauteilen beschrieben, die Eingänge und Ausgänge aufweisen, deren Wert von dem Wert der Eingänge abhängig ist;
e) - Die Verhaltensmuster der im Schritt d) bestimmten verschiedenen Bauteile werden zusammengesetzt, um ein Programm zu erstellen, das den kompletten Betrieb der Maschine wiedergibt;
f) - Die normalen und anormalen Betriebsbedingungen, für welche das Programm des Automaten getestet werden soll, werden in das Verhaltenmuster jedes Grundbauelements der angegebenen Maschine eingeführt;
g) - Die Werte der den Ausgängen des Automaten entsprechenden Eingänge werden in das im Schritt e) erstellte Programm eingegeben;
h) - Dieses Programm wird ausgeführt;
i) - Die so erhaltenen Werte der Ausgänge werden in die Eingänge des Automaten eingegeben;
j) - Es wird automatisch geprüft, ob die vom Automaten erteilten Befehle in Beantwortung der im Schritt i) erhaltenen Informationen korrekt sind;
k) - Die Schritte f) bis j) werden so oft wiederholt, wie dies die verschiedenen Betriebsbedingungen erfordern, die zu untersuchen sind; und
l) - Die Schritte d) bis k) werden so oft wiederholt, wie die verschiedenen, zu untersuchenden Maschine-Automat-Einheiten es erfordern.

2. Verfahren nach Anspruch 1, dadurch gekennzeichnet, daß für jedes Verhaltenmuster die durch die Eingänge dargestellten Parameter der Gruppe angehören, die aus den empfangenen Befehlen, den empfangenen Leistungen, den allgemeinen und den besonderen Betriebsbedingungen, den Betriebsparametern, den möglichen Fehlern und Ausfällen bestehen.

3. Verfahren nach einem der Ansprüche 1 und 2, dadurch gekennzeichnet, daß für jedes Verhaltensmuster die durch die Ausgänge dargestellten Parameter der Gruppe angehören, die aus den gesendeten Befehlen, den gesendeten Leistungen, Informations- oder Kontrollmeldungen bestehen.

4. Verfahren nach einem der Ansprüche 1 bis 3, dadurch gekennzeichnet, daß, wenn die im Schritt f) angegebenen Betriebsbedingungen einem Fehler entsprechen, der zum Stillstand von mindestens einer Untergruppe der Maschine führen kann, der Schritt j) darin besteht zu prüfen, ob der Stillstandmodus korrekt ist.

5. Verfahren nach Anspruch 4, dadurch gekennzeichnet, daß es folgende, zusätzliche Schritte enthält, die nach dem Schritt j) durchgeführt werden:
m) - der dem Fehler zugehörige Wiederanlaufmodus wird angelegt, und
n) - es wird geprüft, ob der Wiederanlauf korrekt abläuft.

6. Vorrichtung zum automatischen Testen des Programms mindestens eines programmierbaren Automaten (3a) zur Steuerung einer angegebenen Maschine mit einem Informatiksystem (1) bestehend aus:
- einem ersten Element (2a), das zur Bildung einer Bibliothek für Bauteile und zur Beschreibung der Maschine dient, wobei diese in eine Anzahl von Untergruppen unterteilt ist und jede Untergruppe als eine Verbindung von Bauteilen beschrieben ist, die Eingänge und Ausgänge aufweisen, deren Wert abhängig vom Wert der Eingänge ist;
- einem zweiten Element (2c), das zur Ausführung eines Programms dient, das das Verhalten der Maschine beschreibt, indem die Verhaltensmuster der notwendigen Bauteile zusammengestellt werden, wobei diese in der Bibliothek der Bauteile erfaßt werden; und
- einem dritten, mit dem Automaten (3a) verbundenen Element (2d), das dazu dient:
a) - dieses Programm zyklisch durchzuführen;
b) - den Eingängen des Automaten (3a) den Wert der Ausgänge der Bauteile zyklisch zu übermitteln; und
c) - dem Informatiksystem (1) den Wert der Ausgänge des Automaten (3a) zu übermitteln, um dementsprechend den Wert der Eingänge der Bauteile zu ändern.

7. Vorrichtung nach Anspruch 6, dadurch gekennzeichnet, daß, da die Machine von mindestens einem Bedienungspult gesteuert wird, das Informatiksystem außerdem ein viertes Element (2b) zum Beschreiben und Simulieren dieses Pults enthält, wobei dieser wie die Maschine durch eine Gruppe von Bauteilen dargestellt wird

8. Vorrichtung nach einem der Ansprüche 6 und 7, dadurch gekennzeichnet, daß sie einen oder mehrere Computer enthält, wobei jeder ein oder mehrere der Elemente (2a bis 2d) bildet.

9. Vorrichtung nach einem der Ansprüche 6 bis 8, dadurch gekennzeichnet, daß das dritte Element (2d) mit dem Automaten (3a) durch eine Reihenverbindung verbunden ist.

10. Vorrichtung nach einem der Ansprüche 6 bis 9, dadurch gekennzeichnet, daß sie zudem eine Kopplungskarte (6a) aufweist, die mit dem dritten Element verbunden und im Automaten (3a) an der Stelle der Eingang-Ausgang-Karten zum Dialog mit der Maschine eingesetzt wird, wobei diese Kopplungskarte (6a) einerseit zur Simulierung der physischen Anwesenheit der Eingang-Ausgang-Karten und andereseits zur Sicherung der Informationsübermittlung zwischen dem Automaten (3a) und dem dritten Element (2d) dient.

11. Vorrichtung nach einem der Ansprüche 1 bis 5, dadurch gekennzeichnet, daß, da der Automat mit einem Kontrollterminal (4a) verbunden ist, das dritte Element (2d) ebenfalls mit diesem Terminal (4a) verbunden ist, um den Dialog mit den, Automaten aufzunehmen.

12. Vorrichtung nach einem der Ansprüche 6 bis 11 dadurch gekennzeichnet, daß da die Maschine mindestens eine numerische Achse, d.h. ein Element enthält, dessen Bewegung nicht ausschließlich von einem Gangende zum anderen erfolgt, sondern Zwischenstops vorweisen kann, sie zudem eine spezifische Karte (7) enthält, die einerseits mit dem dritten Element (2d) und andererseits mit dem programmierbaren Automaten (31) verbunden ist und zur Simulierung des Verhaltens der numerischen Achse dient.
